# EUROPEAN PATENT APPLICATION

(11) **EP 4 734 523 A1**
(43) Date of publication of application: **29.04.2026**
(21) Application number: 24306790.7
(22) Date of filing: 23.10.2024
(51) Int. Cl.: H04N 19/85, H04N 19/70, H04N 19/117

(54) **ENERGY SAVING MODE IN SUPPLEMENTAL ENHANCEMENT INFORMATION PROCESSING ORDER**

(71) Applicant: InterDigital CE Patent Holdings, SAS, 75017 Paris (FR)
(72) Inventor: DEMARTY, Claire-Helene, 35520 MONTREUIL LE GAST (FR); BLONDE, Laurent, 35235 THORIGNE-FOUILLARD (FR); AUMONT, Franck, 35770 VERN SUR SEICHE (FR); LE MEUR, Olivier, 35160 TALENSAC (FR); REINHARD, Erik, 35630 HEDE-BAZOUGES (FR)
(74) Representative: Vossius & Partner Patentanwälte Rechtsanwälte mbB

(57) **Abstract**

Systems, methods, and instrumentalities for energy saving mode in processing order. An example device may obtain encoded video data and processing order metadata that comprises an energy savings indication associated with performing a post-processing series in a processing order. The device may determine, based on the energy savings indication, whether to perform the post-processing series. The device may process the video data based on the determining.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed for an energy saving mode in processing order metadata (e.g., supplemental enhancement information (SEI) processing order). An example video decoding device may obtain encoded video data and processing order metadata that comprises an energy savings indication associated with performing a post-processing series in a processing order. The device may determine, based on the energy savings indication, whether to perform the post-processing series. The device may process the video data based on the determining.

The metadata may be carried in a supplemental enhancement information (SEI) processing order (SPO) message. The device may determine, based on the energy savings indication, to perform the post-processing series. The device may determine, based on determining to perform the post-processing series, a plurality of post-processing filters. The device may apply the plurality of post-processing filters as indicated in the processing order metadata to the video data.

The device may determine, based on the energy savings indication, to perform the post-processing series. The device may apply post-processing filtering to the video data in accordance with the post-processing series in the processing order.

The device may determine, based on the energy savings indication, to bypass the post-processing series. The device may bypass performing the post-processing series on the video data.

The post-processing series may be associated with first post-processing and second post-processing. On a condition that energy available at the video decoding device is above a first threshold associated with the first post-processing and below a second threshold associated with the second post-processing, the device may determine to perform the first post-processing and bypass the second post-processing.

The device may determine that an energy saving condition has been satisfied. Based on the energy saving condition being satisfied, the device may parse the energy saving indication. Whether to perform the post-processing series may be determined based on the parsed energy saving indication.

The device may determine that the energy saving condition has been satisfied by determining that: the video decoding device is in an energy saving mode; the video decoding device is associated with a low energy user profile; or a battery level of the video decoding device is below a threshold.

The processing order metadata may be a first processing order metadata. The post-processing series may be a first post-processing series. The energy savings indication may be a first energy savings indication. The device may receive a second processing order metadata that indicates a second energy savings indication associated with a second post-processing series. On a condition that a value of the first energy savings indication is greater than a value of the second energy savings indication, the device may determine to perform the first post-processing series and bypass the second post-processing series.

Based on determining that the encoded video data has been pre-processed for energy savings, the device may parse an energy module indication configured to indicate a location in a video workflow in which energy savings is expected.

An example video encoding may encode video data. The device may determine processing order metadata that comprises an energy savings indication associated with performing a post-processing series in a processing order. The device may send the encoded video data and the processing order metadata. The metadata may be carried in a supplemental enhancement information (SEI) processing order (SPO) message.

The device may determine whether the post-processing series is compatible with an energy savings mode. The energy savings indication may indicate whether the post-processing series is compatible with the energy savings mode.

The energy savings indication may indicate at least one of: whether a video resulting from the post-processing series is optimized for energy savings, whether the video resulting from the post-processing series is suitable for energy savings, or that it is unknown whether the video resulting from the post-processing series is suitable or optimized for energy savings.

The processing order metadata may be first processing order metadata. The energy savings indication associated with performing the post-processing series in the processing order may be a first energy savings indication associated with performing a first post-processing series. The device may determine second processing order metadata that comprises a second energy savings indication associated with performing a second post-processing series. The device may send the second processing order metadata.

The device may include, in the metadata, processing order module indication configured to indicate a location in a video workflow in which energy savings is expected based on the post-processing series.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows an example encoder implementation.
FIG. 5 shows an example decoder implementation.
FIG. 6 shows an example decoder workflow if multiple (e.g., two or more) SPO SEI messages have the same purpose or po_id.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

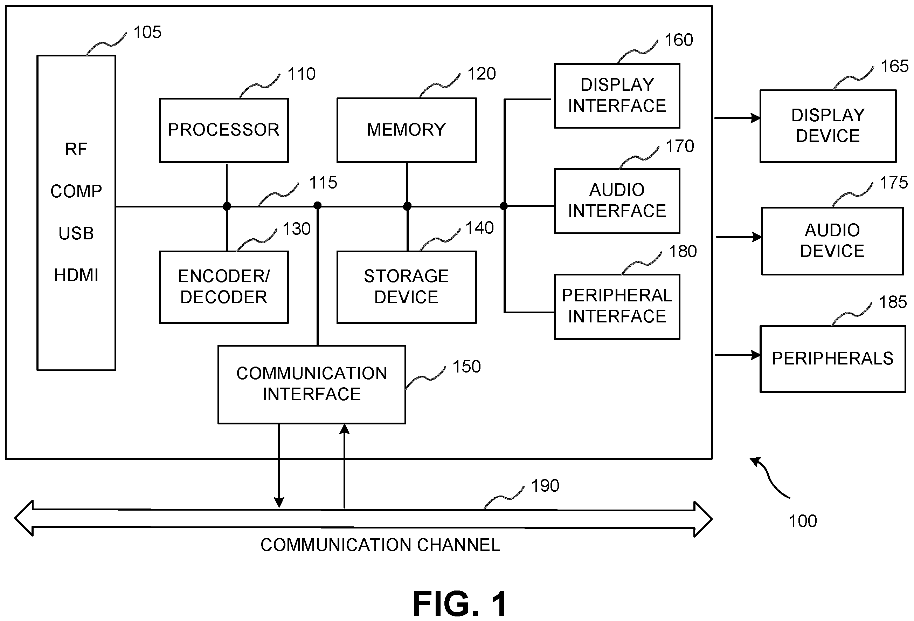

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., over-the-top (OTT) services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

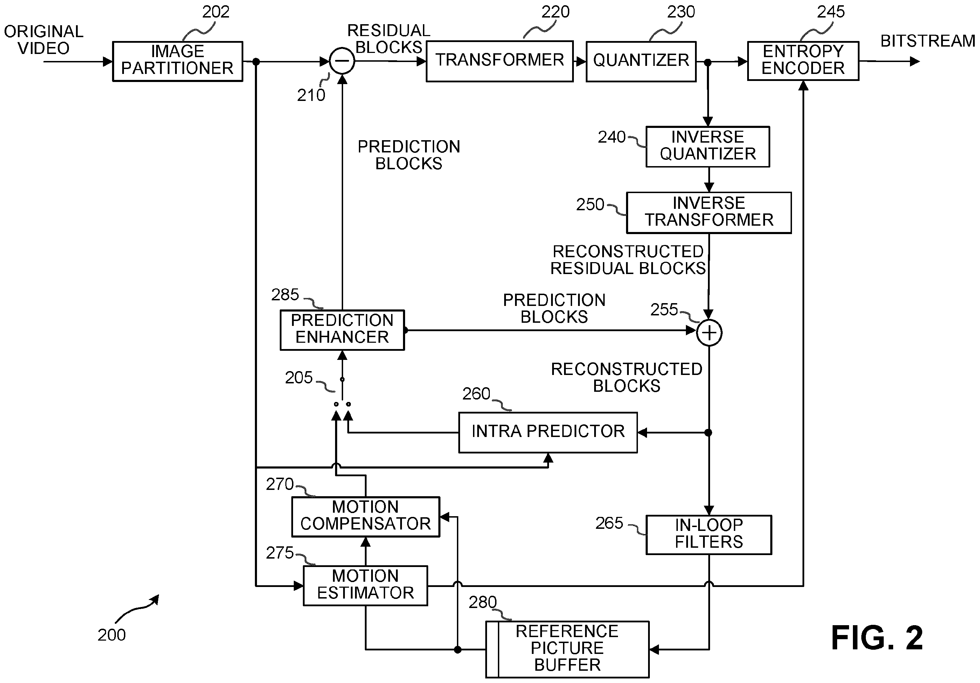

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

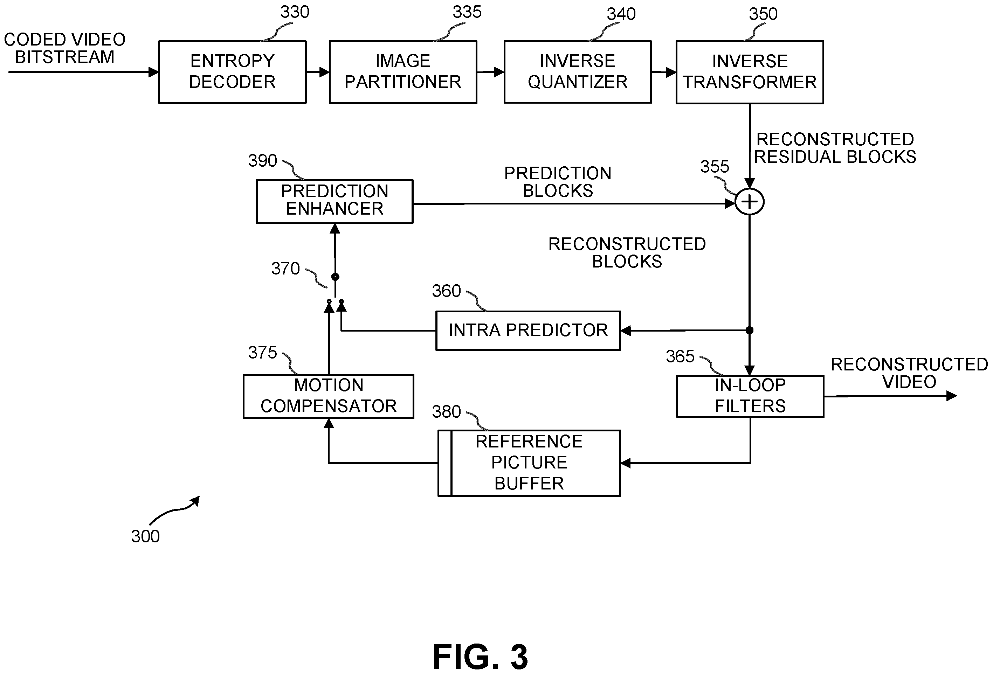

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by *C*, *Cb, Cr*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Feature(s) associated with energy savings optimization of post-processing filters (e.g., applied at the decoder side in the context of video compression) are provided herein.

Example inputs are described herein.

In video compression, energy saving profiles for post-processing filters may be defined.

A processing order metadata (e.g., in the shape of a supplemental enhancement information (SEI) processing order (SPO) message) may carry information indicating a preferred processing order (e.g., as determined by the encoder for example, the content producer), for a group of types of processing order metadata (e.g., in the shape of SEI messages that may be present in a coded video sequence (CVS)).

Metadata that indicates an energy saving mode may be added in the processing order message (e.g., in the shape of an SPO SEI message).

Feature(s) associated with energy reduction are provided herein. Feature(s) associated with SEI signaling are provided herein. Feature(s) associated with processing order information are provided herein. Feature(s) associated with processing order optimization are provided herein. Feature(s) associated with SEI processing order SEI are provided herein. Feature(s) associated with energy consumption are provided herein.

The message (e.g., an SEI message or an SPO SEI message) may indicate a preferred processing order to apply post-processing filters at the decoder side.

Information in the message (e.g., an SPO SEI message) may indicate (e.g., to the decoder) one or more preferred modes for the defined processing orders. For example, the message (e.g., an SPO SEI message) may indicate whether the messages are suitable for human viewing or machine vision tasks.

The message (e.g., an SPO SEI message) may indicate whether the processing orders are suitable for saving energy while applying post-processing (e.g., the whole series of processes or one or more processes in the series).

If insufficient energy is available at the decoder, one processing order may be chosen over another one. If insufficient energy is available at the decoder and the processing order has been optimized for energy savings, the decoder may choose to apply the post processes.

The application of the post-processing order may be determined based on the energy used (e.g., needed). The application of the post-processing order may depend on whether energy saving profile(s) are available at the user side.

The message (e.g., in the shape of an SPO SEI message) may indicate energy saving information.

The message (e.g., in the shape of an SPO SEI message) may indicate a preferred processing order in which to apply post-processing filters at the decoder side.

The message (e.g., in the shape of an SPO SEI message) may indicate whether this message is suitable for energy savings modes or profiles.

Metadata information indicating that the current message (e.g., in the shape of an SPO SEI message) is suitable for energy savings modes or profiles may be added to the message (e.g., in the shape of an SPO SEI message).

Example syntax is provided herein.

The SPO SEI message syntax may be modified as follows:

**Table 1. Example SPO SEI message syntax**

| | |
|---|---|
| sei_processing_order( payloadSize ) { | **Descriptor** |
| **po_id** | u(8) |
| **po_for_human_viewing_idc** | u(2) |
| **po_for_machine_analysis_idc** | u(2) |
| **po_for_energy_saving_idc** | u(2) |
| if (po_for_energy_saving_idc > 1) | |
| **po_energy_module_idc** | u(2) |
| **po_reserved_zero_4bits** | u(4) |
| **po_num_sei_messages_minus2** | u(7) |
| **po_breadth_first_flag** | u(1) |
| for( i = 0, i < po_num_sei_messages_minus2 + 2; i++) { | |
| **po_sei_wrapping_flag**[ i ] | u(1) |
| **po_sei_importance_flag**[ i ] | u(1) |
| **po_sei_processing_degree_flag**[ i ] | u(1) |
| **po_sei_payload_type**[ i ] | u(12) |
| **po_sei_prefix_flag**[ i ] | u(1) |
| **po_sei_processing_order**[ i ] | u(8) |
| } | |
| for( i = 0; i < po_num_sei_messages_minus2 + 2; i++) | |
| if( po_sei_prefix_flag[ i ] ) { | |
| **po_num**_**bits**_**in_prefix**_**indication**_**minus1**[ i ] | u(8) |
| for(j = 0; j <= po_num_bits_in_prefix_indication_minus1[ i ]; j++) | |
| **po_sei_prefix_data_bit**[ i ][ j ] | u(1) |
| while( !byte_aligned( ) ) | |
| **po_byte_alignment_bit_equal_to_one** /* equal to 1 */ | f(1) |
| } | |
| } | |

The following semantics may be used.

po_for_energy_saving_idc equal to 3 may indicate that the intended optimal usage of the video resulting from the processing chain specified by this SPO SEI message includes energy saving processing. po_for_energy_saving_idc equal to 2 may indicate that that the video resulting from the processing chain specified by this SPO SEI message is suitable, but not optimized, for energy saving processing. po_for_energy_saving_idc equal to 1 may indicate that the video resulting from the processing chain specified by this SPO SEI message is unsuitable for energy saving processing. po_for_ energy_saving_idc equal to 0 may indicate that it is unknown if the video resulting from the processing chain specified by this SPO SEI message is suitable for energy_saving processing.

For bitstream conformance, the value of po for_human viewing idc, po_for_machine_analysis_idc and po enegy_saving idc cannot both be equal to 1.

The values of po for_human viewing idc, po_for_machine_analysis_idc and po for energy_saving idc may apply to the output of a processing chain, for example, instead of the respective syntax elements in an encoder optimization information (EOI) SEI message (e.g., eoi for_human viewing idc, eoi_for_machine_analysis_idc and eoi_for_energy_saving_idc ), an encoder energy optimization information (EEOI) SEI message (e.g., eeoi for energy_saving idc), or a neural-network post-filter characteristics (NNPFC) SEI message (e.g., nnpfc for_human viewing idc and nnpfc_for _machine_analysis_idc), if the EOI, the EEOI, or NNPFC SEI message is associated with the processing chain.

po_energy_module_idc may be a bitfield indication of where in the video workflow energy savings may be expected.

**Table 2. Example definitions of po energy_module idc**

| **bitMask** | **Interpretation** |
|---|---|
| 0x01 | Energy savings can be expected while applying the post processing at the decoder side |
| 0x02 | Energy savings can be expected at the display side |

Example encoder implementations are provided herein.

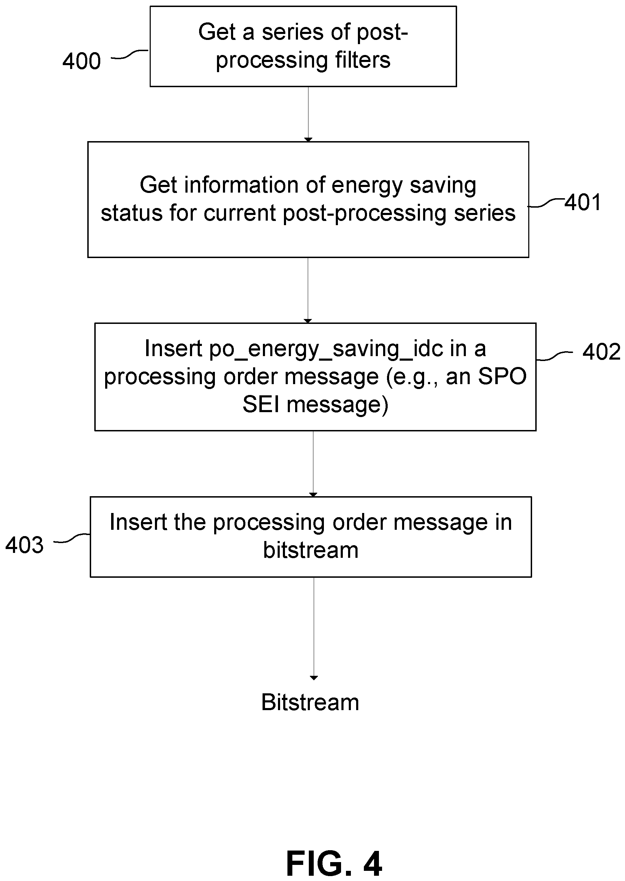

An example implementation at the encoder is illustrated in FIG. 4. At the encoder side, a series of post-processing filters may be defined at 400. At 401, information indicating whether this series is suitable for an energy savings mode of processing may be retrieved. At 402, po energy_saving idc may be inserted into the message (e.g., in the shape of an SPO SEI message or another SEI message). At 403, the message (e.g., in the shape of an SPO SEI message) may be inserted in the bitstream.

Example decoder implementations are provided herein.

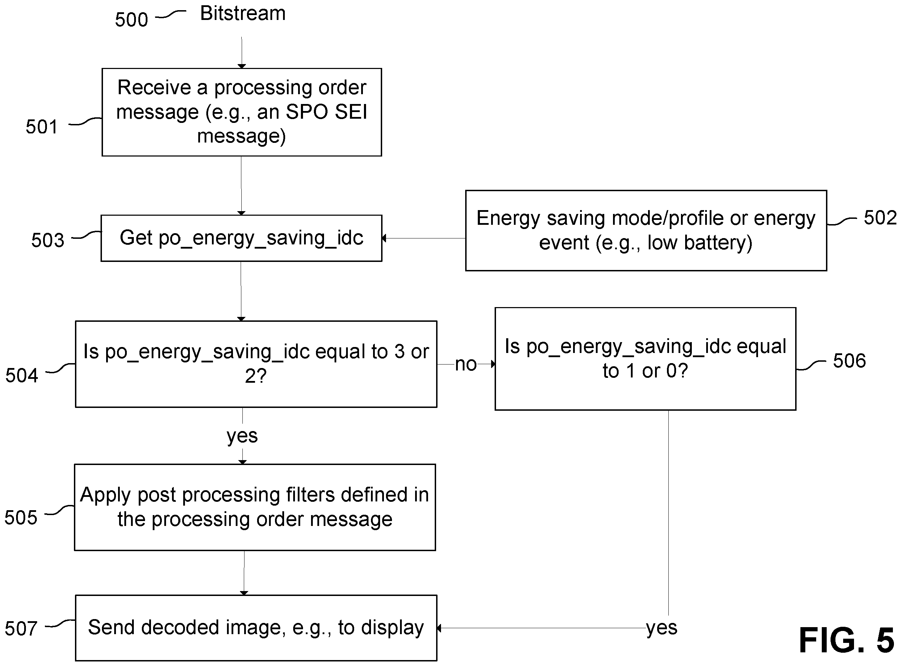

An example implementation at the decoder is illustrated in FIG. 5. At 500, the decoder may receive the bitstream. At 501, the decoder may receive the message (e.g., in the shape of an SPO SEI message). If, at 502, the decoder is in an energy saving mode, is associated with a low energy user profile, or an energy event is detected (e.g., the device battery is low), the decoder may retrieve an indication of energy savings optimization metadata (e.g, the metadata po_energy_saving_idc) at 503. If, at 504, the po_energy_saving_idc value is equal to 2 or 3, to the decoder may launch the series of post-processing filters (e.g., apply the post-processing filters at 505) and send the post-processed image (e.g., to a display (at 507) or for additional processing). If, at 506, the po_energy_saving_idc value is equal to 1 or 0, the post processing chain defined in the message (e.g., in the shape of an SPO SEI message or an SEI message) may not be launched. In this case, the decoder may send the decoded picture for further processing (e.g., to the display at 507, for example, without modification).

At 504, the decoder may launch the post-processing if (e.g., only if) the value of po_energy_saving is equal to 3.

At 504, to the decoder may launch the post-processing if the value of po_energy_saving is equal to 3, 2, or 0.

One or more steps (e.g., additional steps) may be performed between the actions at 504 and 505. For example, launching the series of post-processing actions may be conditioned on the amount of energy used for the post-processing (e.g., the sum of the energy needed for each post-processing). If the amount of energy used (e.g., needed) is too high, the picture may be sent for further processing or (e.g., directly) to the display at 507.

One or more steps (e.g., additional steps) may be performed between the actions at 504 and 505. For example, launching the post-processing may be conditioned on the (e.g., individual) amount of energy used (e.g., needed) for a (e.g., each) post-processing (e.g., individually). In this case, some post-processing may be skipped or replaced by similar post-processing with a lower energy cost (e.g., if this information is available).

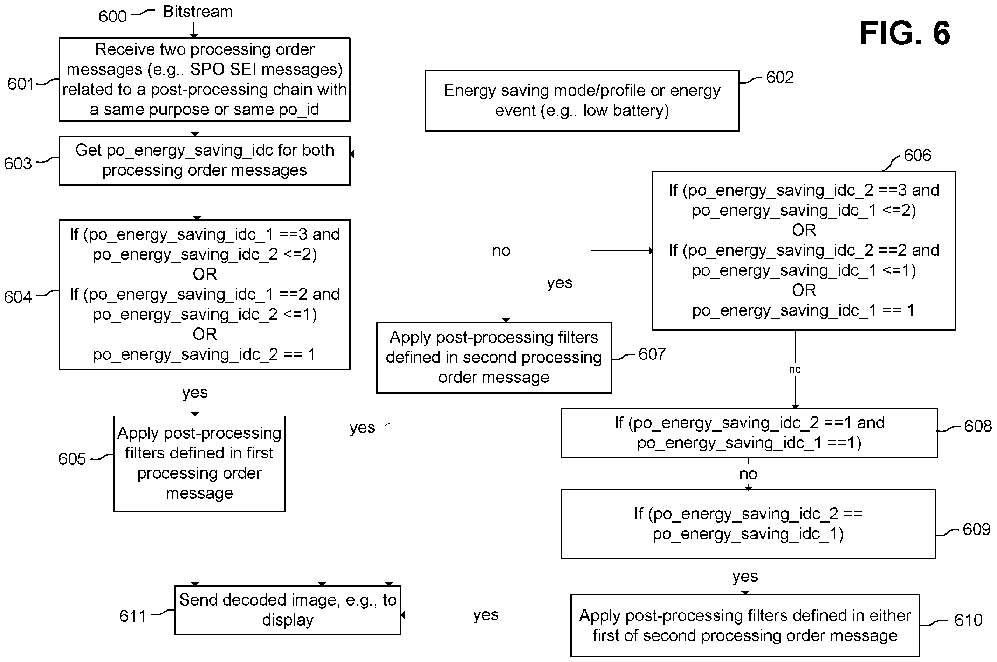

If multiple (e.g., two or more) messages (e.g., in the shape of SPO SEI messages) have the same purpose or po_id (e.g., representing alternatives of the same series of processing but using different post-processing filters), the decoder may follow the workflow illustrated in FIG. 6.

At 600, the decoder may receive the bitstream. At 601, the decoder may receive two or more messages (e.g., in the shape of SPO SEI messages) related to a post-processing chain. The messages (e.g., in the shape of SPO SEI messages) may have the same purpose or po_id. If, at 602, the decoder is in an energy saving mode, is associated with a low energy user profile, or an energy event is detected (e.g., the device battery is low), the decoder may retrieve an indication of energy savings optimization metadata (e.g., the metadata po_energy_saving_idc) for the messages (e.g., SPO SEI messages) at 603.

As illustrated at 604 to 610, if there are two messages (e.g., SPO SEI messages) with the same purpose, one of the messages (e.g., SPO SEI messages) with the highest po_energy_saving_idc value (e.g., 3 or 2) may be applied. If both messages (e.g., SPO SEI messages) with the same purpose have a value of po_energy_saving_idc equal to 1, the decoder may not apply any post-processing. If the value of a message (e.g., an SPO SEI message) is equal to 1, the decoder may apply the post-processing as described by another message (e.g., another SPO SEI message, for example, with a value other than 1). In other cases (e.g., all other cases), for example, if the messages (e.g., SPO SEI messages) have the same values, the decoder may apply post-processing associated with one (e.g., only one) of the messages (e.g., SPO SEI messages). At 611, the decoder may send the decoded image/video to an output (e.g., a display).

The above implementation can be extended to multiple (more than two) messages (e.g., SPO SEI messages) with the same purpose.

Feature(s) described herein may apply to a (e.g., any) message (e.g., SEI message) in which the po_energy_saving_idc metadata was inserted.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. HTTP live Streaming (HLS) manifest transmitted over HTTP.
iii. DASH MPD descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A video decoding device comprising:
a processor configured to:
obtain encoded video data and processing order metadata that comprises an energy savings indication associated with performing a post-processing series in a processing order;
determine, based on the energy savings indication, whether to perform the post-processing series; and
process the video data based on the determining.

2. The video decoding device of claim 1, wherein the processor is further configured to:
determine, based on the energy savings indication, to perform the post-processing series;
determine, based on determining to perform the post-processing series, a plurality of post-processing filters; and
apply the plurality of post-processing filters as indicated in the processing order metadata to the video data.

3. The video decoding device of any one of claims 1 or 2, wherein the processor is further configured to:
determine, based on the energy savings indication, to perform the post-processing series; and
apply post-processing filtering to the video data in accordance with the post-processing series in the processing order.

4. The video decoding device of any one of claims 1 to 3 wherein the processor is further configured to:
determine, based on the energy savings indication, to bypass the post-processing series; and
bypass performing the post-processing series on the video data.

5. The video decoding device of any one of claims 1 to 4, wherein the post-processing series is associated with first post-processing and second post-processing, and the processor is further configured to, on a condition that energy available at the video decoding device is above a first threshold associated with the first post-processing and below a second threshold associated with the second post-processing, determine to perform the first post-processing and bypass the second post-processing.

6. The video decoding device of any one of claims 1 to 5, wherein the processor is further configured to:
determine that an energy saving condition has been satisfied; and
based on the energy saving condition being satisfied, parse the energy saving indication, wherein whether to perform the post-processing series is determined based on the parsed energy saving indication.

7. The video decoding device of claim 6, wherein the processor being configured to determine that the energy saving condition has been satisfied comprises the processor being configured to determine that:
the video decoding device is in an energy saving mode;
the video decoding device is associated with a low energy user profile; or
a battery level of the video decoding device is below a threshold.

8. The video decoding device of any one of claims 1 to 7, wherein the processing order metadata is a first processing order metadata, the post-processing series is a first post-processing series, the energy savings indication is a first energy savings indication, and the processor is further configured to:
receive a second processing order metadata that indicates a second energy savings indication associated with a second post-processing series; and
on a condition that a value of the first energy savings indication is greater than a value of the second energy savings indication, determine to perform the first post-processing series and bypass the second post-processing series.

9. The video decoding device of any one of claims 1 to 8, wherein processor is further configured to:
based on determining that the encoded video data has been pre-processed for energy savings, parse an energy module indication configured to indicate a location in a video workflow in which energy savings is expected.

10. A video encoding device comprising:
a processor configured to:
encode video data;
determine processing order metadata that comprises an energy savings indication associated with performing a post-processing series in a processing order; and
send the encoded video data and the processing order metadata.

11. The video decoding device of claim 1 or the video encoding device of claim 10, wherein the metadata is carried in a supplemental enhancement information (SEI) processing order (SPO) message.

12. The video encoding device of claim 10 or 11, wherein the processor is further configured to:
determine whether the post-processing series is compatible with an energy savings mode, wherein the energy savings indication indicates whether the post-processing series is compatible with the energy savings mode.

13. The video encoding device of claim 10, wherein the energy savings indication indicates at least one of: whether a video resulting from the post-processing series is optimized for energy savings, whether the video resulting from the post-processing series is suitable for energy savings, or that it is unknown whether the video resulting from the post-processing series is suitable or optimized for energy savings.

14. The video encoding device of any one of claims 10 to 12, wherein the processing order metadata is first processing order metadata, the energy savings indication associated with performing the post-processing series in the processing order is a first energy savings indication associated with performing a first post-processing series, and the processor is further configured to:
determine second processing order metadata that comprises a second energy savings indication associated with performing a second post-processing series; and
send the second processing order metadata.

15. The video encoding device of claim 10, wherein the processor is further configured to include, in the metadata, processing order module indication configured to indicate a location in a video workflow in which energy savings is expected based on the post-processing series.
